(19) Europäisches Patentamt
European Patent Office
Office européen des brevets

(11) EP 3 315 371 A1

(12) EUROPEAN PATENT APPLICATION

(43) Date of publication:
02.05.2018 Bulletin 2018/18

(51) Int Cl.:
B60T 8/1755 (2006.01) B62D 6/00 (2006.01)
B60W 30/045 (2012.01)

(21) Application number: 17198830.6

(22) Date of filing: 27.10.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.10.2016 JP 2016213568

(71) Applicant: JTEKT Corporation
Osaka-shi,
Osaka 542-8502 (JP)

(72) Inventor: KIMURA, Shuuji
Osaka-shi,, Osaka 542-8502 (JP)

(74) Representative: Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)

(54) **VEHICLE ATTITUDE CONTROL SYSTEM**

(57) A vehicle attitude control system includes a target sideslip angle calculating unit (151) configured to calculate a target sideslip angle ($\beta_s$) for turning of a vehicle based on a steering angle ($\delta$) and a vehicle speed (v), and a target sideslip angle correcting unit (152) configured to correct the target sideslip angle ($\beta_s$) calculated by the target sideslip angle calculating unit (151) by using a sideslip angle correction amount ($\Delta\beta$) calculated based on at least one selected from a torque (T) of an axle and an injection amount (F) of fuel supplied to an engine (31). The attitude of the vehicle is controlled by using a target sideslip angle ($\beta^*$) obtained through the correction performed by the target sideslip angle correcting unit (152).

## FIG.2

**Description**

BACKGROUND OF THE INVENTION

1. Field of the Invention

The present invention relates to a vehicle attitude control system.

2. Description of the Related Art

An electronic vehicle attitude control mechanism (electronic stability control (ESC)) or a sideslip preventing mechanism is a mechanism configured to prevent a sideslip of a vehicle by automatically and independently applying brakes to individual wheels when a sideslip caused by sudden acceleration, deceleration, or steering is detected while the vehicle is traveling.

The electronic vehicle attitude control mechanism corrects or keeps the traveling direction of the vehicle by collecting information from various sensors that detect, for example, a vehicle speed, a steering angle of a steering wheel, a rotational speed of each wheel, and a longitudinal acceleration, a lateral acceleration, and a rotational angular velocity (yaw rate) of the vehicle, detecting an unstable vehicle condition, and executing, for example, independent steered angle control for the wheels, independent brake control for the wheels, and output power control for an engine.

Specifically, when the vehicle understeers, braking forces for wheels on an inner side of turning are set larger than braking forces for wheels on an outer side of turning, thereby generating a vehicle yaw moment toward the inner side of turning. When the vehicle oversteers, the braking forces for the wheels on the outer side of turning are set larger than the braking forces for the wheels on the inner side of turning, thereby generating a vehicle yaw moment toward the outer side of turning. In this manner, the vehicle behavior is stabilized.

For example, in Japanese Patent Application Publication No. 2001-233195 (JP 2001-233195 A), information on a steering angle of a steering wheel and vehicle behavior information (a vehicle speed, a rotational speed of each wheel, and a longitudinal acceleration, a lateral acceleration, and a yaw rate of a vehicle) are collected in order to detect the vehicle condition, and a target vehicle body sideslip angle is calculated. However, the vehicle behavior information includes a delay caused mainly by an influence of the inertia of the vehicle from the time when a driver expresses his/her intention. Therefore, the vehicle behavior information is effective as information for determining the vehicle condition at a certain time, but still has a problem as information for determining a target value of the vehicle behavior based on the driver's intention.

Japanese Patent Application Publication No. 2013-82268 (JP 2013-82268 A) describes the following invention. A sideslip angle correction amount is calculated based on an operation amount of an operation device that is operated by a driver as information that has a relationship with the vehicle behavior but has no delay from the driver's intention. For example, the operation amount is at least one selected from a steering angular velocity of a steering wheel, a depression amount of an accelerator pedal, a depression velocity of the accelerator pedal, and a depression amount of a foot brake pedal. A target sideslip angle is corrected by using the sideslip angle correction amount, and the attitude of the vehicle is controlled by using the corrected sideslip angle. Thus, the attitude of the vehicle can be controlled based on the control target that has no delay from the driver's intention. Accordingly, the operability of the vehicle can be improved.

Also in the technology described in JP 2013-82268 A, however, play, friction, viscosity, elasticity, inertia, and the like are involved in a steering system connected to the steering wheel, a transmission system configured to transmit a torque of an engine as a driving force for each driving wheel based on an operation of the accelerator pedal, and a transmission system configured to generate a braking force based on an operation of the foot brake pedal. Therefore, an area having no correlation is present between the driver's operation amount and the vehicle behavior. Thus, it is difficult to further improve the accuracy of calculation of the target vehicle body sideslip angle.

SUMMARY OF THE INVENTION

It is one object of the present invention to provide a vehicle attitude control system configured to control the attitude of a vehicle by directly or indirectly detecting a physical quantity relating to a sideslip angle of the vehicle, specifically, a torque applied to a wheel axle, instead of measuring a quantity relating to an operation device that is operated by a driver, and by correcting a target vehicle body sideslip angle based on the detected torque, whereby the vehicle is allowed to turn as intended by the driver.

A vehicle attitude control system according to one aspect of the present invention includes a target sideslip angle calculating unit, a torque detector, a target sideslip angle correcting unit, and an attitude control unit. The target sideslip angle calculating unit is configured to calculate a target sideslip angle for turning of a vehicle based on a steering angle and a vehicle speed. The torque detector is configured to detect a torque of a rotary shaft constituting a driving system configured to transmit power output from a power source to a driving wheel. The target sideslip angle correcting unit is configured to correct the target sideslip angle by using a sideslip angle correction amount calculated based on the torque detected by the torque detector. The attitude control unit is configured to control an attitude of the vehicle by using the target sideslip angle corrected by the target sideslip angle correcting unit.

According to this configuration, the torque applied to the rotary shaft constituting the driving system is detected, and the target sideslip angle can be corrected based on the detected torque. Therefore, the sideslip angle correction amount can be determined with higher accuracy than that in a case of measuring a shift amount of an operation device that is operated by a driver. Thus, the accuracy of correction of the sideslip angle can be improved, whereby the vehicle is allowed to turn as intended by the driver.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic diagram illustrating the schematic configuration of a vehicle attitude control system according to one embodiment of the present invention;
FIG. 2 is a control block diagram of an attitude control unit 15;
FIG. 3 is a graph illustrating a relationship between a sideslip angle correction amount ($\Delta\beta$) and a torque T applied to any part of a rotary shaft constituting a driving system configured to transmit power output from an engine to driving wheels or an injection amount F of fuel supplied to the engine;
FIG. 4 is a graph illustrating a relationship according to another embodiment between the sideslip angle correction amount ($\Delta\beta$) and the torque T applied to any part of the rotary shaft constituting the driving system configured to transmit the power output from the engine to the driving wheels or the injection amount F of the fuel supplied to the engine; and
FIG. 5 is a flowchart for describing an overall control procedure of the attitude control unit 15.

DETAILED DESCRIPTION OF EMBODIMENTS

An embodiment of the present invention is described below in detail with reference to the accompanying drawings.

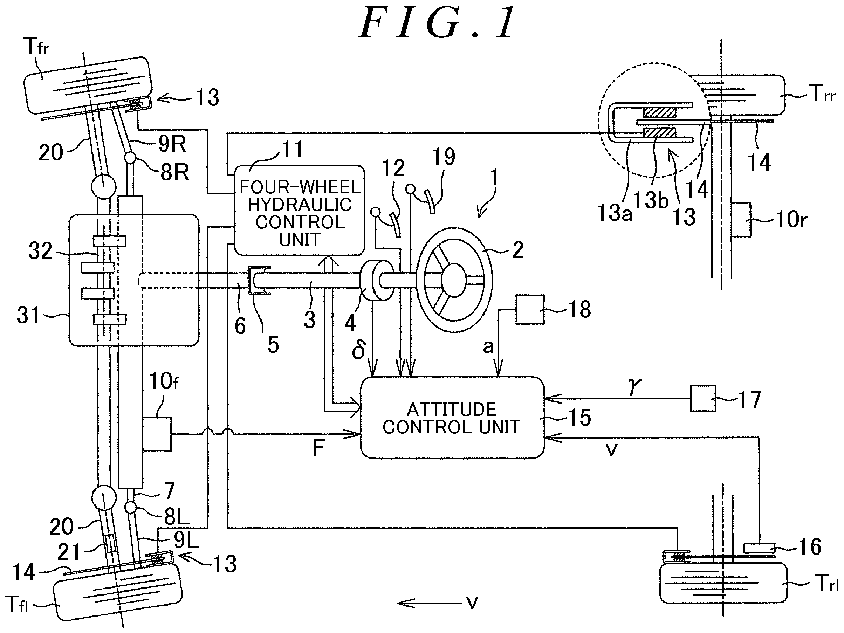

FIG. 1 is a schematic diagram illustrating the schematic configuration of a vehicle attitude control system.

A vehicle attitude control system 1 includes a steering member 2 such as a steering wheel, and a steering shaft 3 coupled to the steering member 2 so as to be rotatable together with the steering member 2. The steering shaft 3 is provided with a steering angle sensor 4 configured to detect a steering angle $\delta$ of the steering member 2. The steering angle sensor 4 detects a rotational angle of the steering shaft 3 by detecting, with a magnetic sensing element or the like, a multipolar magnet attached to the circumference of the steering shaft 3 coupled to the steering member 2. The steering member 2 is attached to one end of the steering shaft 3, and the other end of the steering shaft 3 is coupled to a universal joint 5 and is further coupled to front wheels $T_{fr}$ and $T_{fl}$ that are driving wheels from the universal joint 5 via a steering operation mechanism.

The steering operation mechanism includes a pinion shaft 6, a rack shaft 7, and tie rods 9R and 9L. One end of the pinion shaft 6 is coupled to the universal joint 5. The rack shaft 7 serves as a steering operation shaft meshing with a pinion provided at the other end of the pinion shaft 6 and extending in a lateral direction of the vehicle. The tie rods 9R and 9L are coupled to a pair of ends of the rack shaft 7 via ball joints 8R and 8L, respectively. The reference symbol "$10_f$" represents an axial force sensor for detecting an axial force applied to the rack shaft 7, and the reference symbol "$10_r$" represents an axial force sensor for detecting an axial force applied to an axle of rear wheels.

A steering assist electric motor (not illustrated) is coupled to the steering shaft 3 or the rack shaft 7 via a gear device. The steering assist electric motor supplies a steering assist force.

In the vehicle on which the vehicle attitude control system 1 is mounted, a torque sensor 21 is attached to an axle 20 that transmits a driving torque of an engine 31 to the driving wheels. The torque sensor 21 detects the driving torque transmitted from the engine 31. The driving wheels may be either the front wheels or the rear wheels. In this embodiment, the front wheels are defined as the driving wheels. The torque sensor 21 detects the torque based on an electric signal acquired from a strain gauge (not illustrated) attached to the axle 20.

In the example described above, the driving torque transmitted from the engine 31 is detected by attaching the torque sensor 21 to the axle 20 of the driving wheels, but the location where the driving torque is detected is not limited to the axle 20 of the driving wheels. The torque sensor may be attached to an arbitrary part of any rotary shaft constituting a driving system configured to transmit the power output from the engine 31 to the driving wheels. For example, the torque sensor may be attached to an output shaft (crankshaft) 32 of the engine 31. Also in this case, the driving torque transmitted from the engine 31 can be detected. A transmission (not illustrated) is interposed between the output shaft of the engine 31 and the axle. When the torque applied to the axle of the driving wheels is calculated, the speed ratio of the transmission needs to be taken into consideration.

The injection amount of fuel supplied to the engine 31 may be used as a sensor signal. This is because the injection amount of the fuel can be considered to be substantially proportional to the driving torque output from the engine 31. Also in this case, the speed ratio between the engine 31 and the wheel axle is taken into consideration. The signal indicating the injection amount of the fuel may be acquired from, for example, an on-board network (controller area network (CAN)).

As described above, the driving torque transmitted from the engine 31 to the driving wheels can be estimated by using (1) the torque applied to any part of the rotary shaft constituting the driving system configured to transmit the power output from the engine 31 to the driving wheels, (2) the injection amount of the fuel supplied to the engine 31, or a combination of (1) and (2).

Referring to FIG. 1, the vehicle attitude control system 1 further includes a four-wheel hydraulic control unit 11 for applying brakes to the right and left wheels in the front and rear of the vehicle. The four-wheel hydraulic control unit 11 generates braking pressures for the wheels in accordance with a depression force of a brake pedal 12 by using a master cylinder. The braking pressures are distributed from the four-wheel hydraulic control unit 11 to brake devices 13 for the respective wheels as wheel cylinder pressures (brake pressures), thereby causing the brake devices 13 to apply the braking forces to the wheels, respectively.

The structure of the brake device 13 is illustrated in an enlarged view encircled by the dashed line at a part corresponding to a right rear wheel $T_{rr}$ in FIG. 1. The brake device 13 is structured to generate a braking force such that a brake pad 13b attached into a caliper 13a is pressed against a rotor 14 of the wheel.

The four-wheel hydraulic control unit 11 is connected to an attitude control unit 15 constituted by a computer. The steering angle sensor 4 and the axial force sensors 10 that are described above, a wheel speed sensor 16, a yaw rate sensor 17, and a lateral acceleration sensor 18 are connected to the attitude control unit 15. The wheel speed sensor 16 detects a rotational speed of the wheel. The yaw rate sensor 17 is attached to a vehicle body. The lateral acceleration sensor 18 is also attached to the vehicle body. The wheel speed sensor 16 is a sensor configured to optically read a rotational speed of the rotor 14 of the wheel. The wheel speed sensor 16 detects a vehicle speed v by multiplying the read rotational speed by an effective rotation radius of the wheel. The yaw rate sensor is a sensor configured to detect a rotational angular velocity (yaw rate) of the vehicle. For example, the yaw rate sensor detects the rotational angular velocity of the vehicle by detecting the Coriolis force applied to an oscillator by using a piezoelectric element. The lateral acceleration sensor is a sensor configured to detect an acceleration in a lateral direction of the vehicle. For example, the lateral acceleration sensor detects the acceleration in the lateral direction of the vehicle by detecting a change in the capacitance generated between a movable portion and a stationary portion of a sensor element.

The attitude control unit 15 calculates a target vehicle body sideslip angle β* (a vehicle body sideslip angle is an angle formed by a vector of a velocity in the lateral direction of the vehicle body and a velocity in the longitudinal direction of the vehicle body; hereinafter referred to simply as "sideslip angle") based on the vehicle speed v detected by the wheel speed sensor 16 and the steering angle δ detected by the steering angle sensor 4. The attitude control unit 15 determines brake pressures to be distributed to the rear wheels based on a difference between the target sideslip angle β* and an actual sideslip angle β estimated by using the yaw rate sensor 17 and the lateral acceleration sensor 18, and provides a signal indicating the brake pressures to the four-wheel hydraulic control unit 11.

In this embodiment, the steering angle δ to be processed takes a positive value when the steering member 2 is operated leftward from a neutral position, and takes a negative value when the steering member 2 is operated rightward from the neutral position. The right turn and the left turn can be distinguished from each other by using a detection signal from the steering angle sensor 4, the yaw rate sensor 17, or the lateral acceleration sensor 18. The vehicle body sideslip angle β to be processed takes a positive value when the vehicle body is oriented to the left from a neutral position, and takes a negative value when the vehicle body is oriented to the right from the neutral position. A torque T takes a positive value when the vehicle is accelerated, and takes a negative value when the vehicle is decelerated.

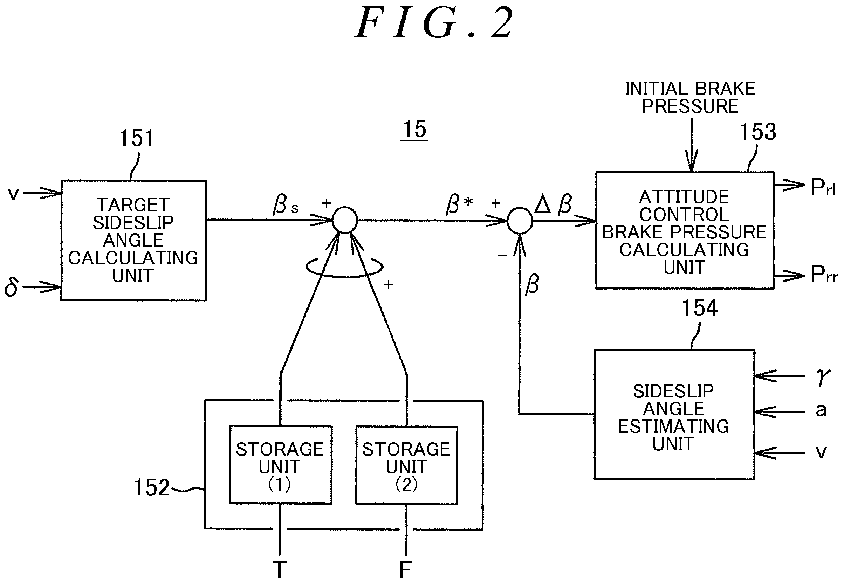

FIG. 2 is a control block diagram of the attitude control unit 15.

The attitude control unit 15 includes a target sideslip angle calculating unit 151 and a target sideslip angle correcting unit 152. The target sideslip angle calculating unit 151 calculates a target sideslip angle $\beta_s$ based on the vehicle speed v acquired from the wheel speed sensor 16 and the steering angle δ acquired from the steering angle sensor 4. The target sideslip angle correcting unit 152 includes one or both of two storage units (1) and (2) described later. An arithmetic expression for the target sideslip angle $\beta_s$ is described later.

The target sideslip angle $\beta_s$ calculated by the target sideslip angle calculating unit 151 is corrected by the target sideslip angle correcting unit 152 based on at least one of the torque T and a fuel injection amount F.

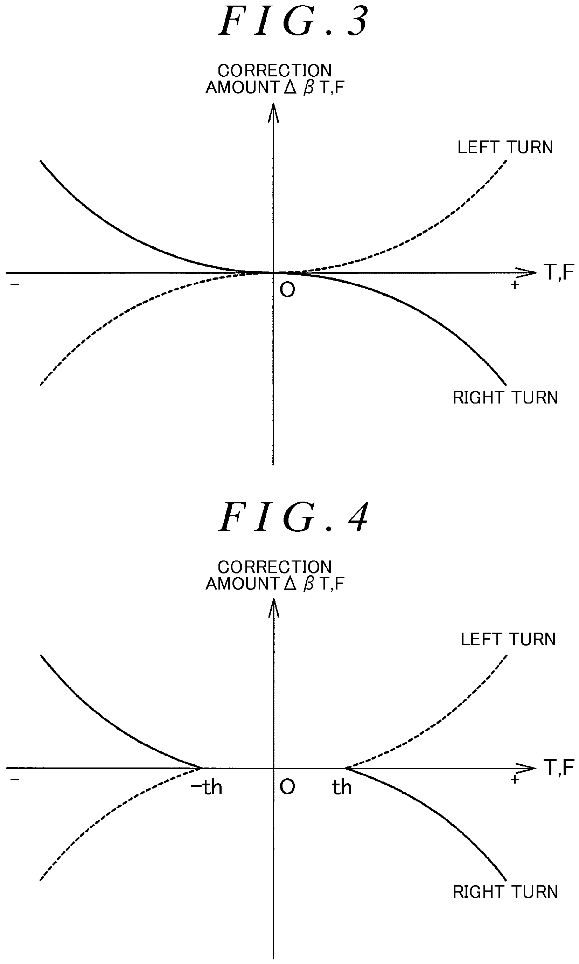

When the target sideslip angle correcting unit 152 includes the storage unit (1), the storage unit (1) stores a predetermined relationship (map) between the torque T and a sideslip angle correction amount $\Delta\beta_T$. The first sideslip angle correction amount $\Delta\beta_T$ is calculated by applying the torque T to this relationship. This relationship is illustrated in a graph of FIG. 3.

In the graph of FIG. 3, as the torque T increases in the positive direction, the sideslip angle correction amount $\Delta\beta_T$ increases in the negative direction when the vehicle makes a turn to the right, and increases in the positive direction when the vehicle makes a turn to the left. As the torque T increases in the negative direction, the sideslip angle correction amount $\Delta\beta_T$ increases in the positive direction when the vehicle makes a turn to the right, and increases in the negative direction when the vehicle makes a turn to the left. Thus, when the torque T increases in the positive direction by, for example, depressing an accelerator pedal 19 while operating the steering member 2 leftward, the target sideslip angle $\beta_s$ is corrected so as to increase in the positive (leftward) direction. When the torque T increases in the positive direction by, for example, depressing the accelerator pedal 19 while operating the steering member 2 rightward, the target sideslip angle $\beta_s$ is corrected so as to increase in the negative (rightward) direction.

When the torque T increases in the negative direction by, for example, depressing the brake pedal 12 while operating the steering member 2 rightward, the target sideslip angle $\beta_s$ is corrected so as to increase in the positive (leftward) direction. When the torque T increases in the negative direction by, for example, depressing the brake pedal 12 while operating the steering member 2 leftward, the target sideslip angle $\beta_s$ is corrected so as to increase in the negative (rightward) direction. When the brake pedal 12 is depressed, it is assumed that a torque T in accordance with the braking force (braking torque) is generated on the axle 20. Therefore, the imaginary torque T in accordance with the brake pressure is calculated and used.

In the graph of FIG. 3, as the absolute value of the torque T increases from zero, the absolute value of the sideslip angle correction amount $\Delta\beta_T$ increases monotonously. As illustrated in FIG. 4, the sideslip angle correction amount $\Delta\beta_T$ may be set to zero when the torque T falls within a range from a threshold -th to a threshold th, and the absolute value of the sideslip angle correction amount $\Delta\beta_T$ may start to increase when the torque T exceeds the threshold th in the positive direction or the threshold -th in the negative direction.

In the graph of FIG. 4, the target sideslip angle $\beta_s$ is not corrected unless the accelerator or the brake is operated suddenly. This is because a determination is made that the vehicle attitude control need not be assisted within a range in which the traveling condition is fully controllable by a driver without sudden acceleration, deceleration, or steering. When the driver performs a sudden operation, the target sideslip angle $\beta_s$ is corrected so as to increase the steering angle of the steering member 2 during acceleration, or to reduce the steering angle of the steering member 2 during deceleration.

When the torque T increases in the positive or negative direction in FIG. 3 or FIG. 4, the absolute value of the sideslip angle correction amount $\Delta\beta_T$ may be set so as to converge on an upper limit value.

The above description is directed to the case where the target sideslip angle correcting unit 152 includes the storage unit (1) that stores the predetermined relationship between the torque T and the sideslip angle correction amount $\Delta\beta_T$. The target sideslip angle correcting unit 152 may include the storage unit (2) that stores a relationship between the injection amount F of the fuel supplied to the engine 31 and a second sideslip angle correction amount $\Delta\beta_F$. The graph stored in the storage unit (2) shows substantially the same tendency as that of FIG. 3 or FIG. 4. Therefore, the graphs of FIG. 3 and FIG. 4 are provided representatively.

The numerical values in the graph of the sideslip angle correction amount $\Delta\beta_T$ or $\Delta\beta_F$ described above are design values that are determined in accordance with the speed, the weight, and the wheel base of the vehicle.

When the target sideslip angle correcting unit 152 includes the storage units (1) and (2), the attitude control unit 15 may calculate the sideslip angle correction amount $\Delta\beta$ based on the following expression.

$$\Delta\beta = G\Delta\beta_T + H\Delta\beta_F \qquad (1)$$

The coefficients G and H are weighting coefficients for the sideslip angle correction amounts $\Delta\beta_T$ and $\Delta\beta_F$. The corrected target sideslip angle $\beta^*$ is represented by the following expression.

$$\beta^* = \beta_s + \Delta\beta \qquad (2)$$

When the target sideslip angle correcting unit 152 includes one of the storage units (1) and (2) alone, the attitude control unit 15 may calculate the sideslip angle correction amount $\Delta\beta$ by applying the corresponding sideslip angle correction amount and the corresponding weighting coefficient.

As illustrated in FIG. 2, the attitude control unit 15 further includes a sideslip angle estimating unit 154 and an attitude control brake pressure calculating unit 153. The sideslip angle estimating unit 154 estimates the actual vehicle body sideslip angle β based on a yaw rate γ detected by the yaw rate sensor, a lateral acceleration α detected by the lateral acceleration sensor, and the vehicle speed v. The attitude control brake pressure calculating unit 153 determines a difference (β - β*) between the corrected target sideslip angle β* and the estimated vehicle body sideslip angle β, and calculates an attitude control brake pressure based on the difference (β - β*).

The brake pressure for the right rear wheel and the brake pressure for the left rear wheel, which are calculated by the attitude control brake pressure calculating unit 153, are distributed to the respective rear wheels. At this time, the vehicle behavior is detected by the yaw rate sensor and the lateral acceleration sensor, and the vehicle body sideslip angle β is determined by the sideslip angle estimating unit 154. The attitude control brake pressure calculating unit 153 calculates the attitude control brake pressure based on the difference (β - β*) between the vehicle body sideslip angle β and the target sideslip angle β*, thereby performing feedback control so that the vehicle body sideslip angle β is maintained to be the target sideslip angle β*.

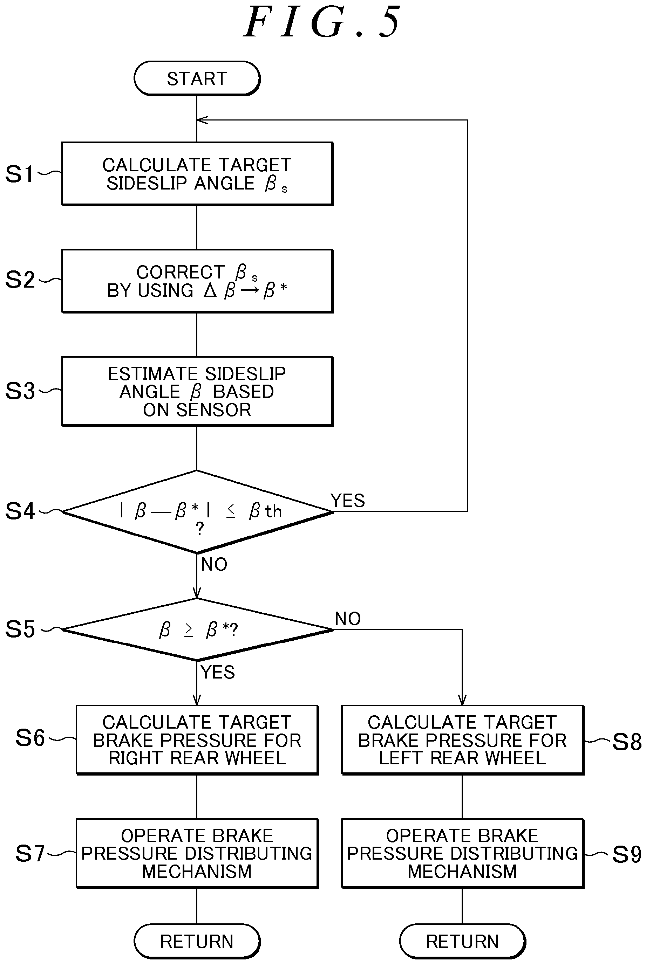

FIG. 5 is a flowchart for describing an overall procedure of the attitude control unit 15.

The attitude control unit 15 calculates the target sideslip angle $\beta_s$ (Step S1).

An example of the arithmetic expression for the target sideslip angle $\beta_s$ is as follows. It is assumed that m represents a vehicle weight, v represents a vehicle speed, L represents a wheel base ($L = L_f + L_r$), $L_f$ represents a distance between a vehicle center of gravity and the front axle, $L_r$ represents a distance between the vehicle center of gravity and the rear axle, $C_f$ represents cornering power (a ratio between a tire lateral force and a tire sideslip angle in the vicinity of a tire sideslip angle of 0 degrees) of the front wheels, and $C_r$ represents cornering power of the rear wheels.

$$\beta_s = (A / B)(L_f / L)\delta \qquad (3)$$

The parameters A and B are calculated by the following expressions, respectively.

$$A = 1 - (m / 2L)(L_f / L_r C_r)v^2 \qquad (4)$$

$$B = 1 - (m / 2L^2)[(L_f C_f - L_r C_r) / C_f C_r]v^2 \qquad (5)$$

The attitude control unit 15 determines the corrected target sideslip angle β* by using the expressions (1) and (2) described above (Step S2).

The actual vehicle body sideslip angle β is estimated based on the following expression by using the yaw rate γ detected by the yaw rate sensor and the lateral acceleration α detected by the lateral acceleration sensor.

$$\beta = \int(-\gamma + \alpha / v)dt \qquad (6)$$

The interval of integration is defined to be a range from a time immediately before the vehicle makes a turn (at this time, all of γ, α, and β are zero) to a current time t during the turn. Thus, the vehicle body sideslip angle β can be determined as a function of the time t (Step S3).

The actual vehicle body sideslip angle β may be determined as follows by using a detection value from the axial force sensor 10 instead of using the expression (6).

$$\beta = F_{yf} / C_f - L_f \gamma / v + \delta \qquad (7)$$

where $F_{yf}$ represents an axial force of the front wheel axle.

The attitude control brake pressure calculating unit 153 determines the difference (β - β*) between the target sideslip angle β* and the actual vehicle body sideslip angle β (Step S4), and calculates the attitude control brake pressure based on the difference (β - β*) (Step S5).

In Step S4, the attitude control brake pressure is not calculated when an absolute value |β - β*| of the difference (β - β*) is equal to or smaller than a threshold $\beta t_h$ for determining whether to start the attitude control. In this case, the brake pressures are controlled based only on brake pressures in accordance with the driver's depression force of the brake pedal 12 (referred to as initial brake pressures).

The attitude control brake pressure is calculated when the absolute value |β - β*| of the difference (β - β*) is larger than the threshold $\beta_{th}$ (Steps S5 to S9). The attitude control brake pressure is a brake pressure to be added to the right rear wheel or the left rear wheel in accordance with the sign (positive or negative) of the difference (β - β*).

When the difference (β - β*) is larger than zero ((β - β*) > 0) (Yes in Step S5), the vehicle body is deviated leftward from the orientation indicated by the target sideslip angle β*. Therefore, a target brake pressure $P_{rr}$ for the right rear wheel is calculated (Step S6). The condition that the difference (β - β*) is larger than zero ((β - β*) > 0) means that the actual sideslip angle β of the vehicle body is deviated from the target sideslip angle in the positive (leftward) direction and therefore the vehicle body is oriented to the left with respect to the target orientation. Therefore, the brake pressure for the right rear wheel is set relatively larger than the initial brake pressure (Step S7). The brake pressure $P_{rr}$ to be set for the right rear wheel is calculated based on the following expression.

$$P_{rr} = P_0 + G_{br}|\beta - \beta^*| \qquad (8)$$

where Po represents an initial brake pressure, and $G_{br}$ represents a gain coefficient determined in accordance with a target response for the sideslip angle β that is a function of the yaw rate γ and the lateral acceleration α and is considered to be generated based on the set brake pressure.

When the difference (β - β*) is smaller than zero ((β - β*) < 0) (No in Step S5), the vehicle body is deviated rightward from the orientation indicated by the target sideslip angle β*. Therefore, a target brake pressure $P_{rl}$ for the left rear wheel is calculated (Step S8). In this case, the actual sideslip angle β of the vehicle body is deviated from the target sideslip angle in the negative (rightward) direction, and therefore the vehicle body is oriented to the right with respect to the target orientation. Therefore, the brake pressure for the left rear wheel is set relatively larger than the initial brake pressure (Step S9). The brake pressure $P_{rl}$ to be set for the left rear wheel is calculated based on the following expression.

$$P_{rl} = P_0 + G_{br}|\beta - \beta^*| \qquad (9)$$

As described above, the attitude of the vehicle is controlled so that the vehicle body sideslip angle β is adjusted to the target sideslip angle β*. When the actual sideslip angle β of the vehicle body deviates from the target sideslip angle, the brake pressure for the right rear wheel or the left rear wheel is increased, thereby allowing the vehicle to turn as intended by the driver without causing understeer or oversteer irrespective of whether the vehicle is accelerated or decelerated.

Although the embodiment of the present invention has been described above, the present invention is not limited to the embodiment described above. In the embodiment described above, the brake pressure is controlled over the rear wheels in order to control the attitude of the vehicle by using the corrected target sideslip angle. Alternatively, the brake pressure may be controlled over the four wheels including the front wheels. In a four-wheel drive vehicle, driving force distribution control over the right and left rear wheels may be employed, or driving force distribution control over the four wheels including the front wheels may be employed instead. The present invention is also applicable to a vehicle using not only an internal combustion engine but also an electric motor as the power source, such as an electric vehicle and a hybrid vehicle.

**Claims**

1.  A vehicle attitude control system, comprising:

    a target sideslip angle calculating unit configured to calculate a target sideslip angle for turning of a vehicle based on a steering angle and a vehicle speed;
    a torque detector configured to detect a torque of a rotary shaft constituting a driving system configured to transmit power output from a power source to a driving wheel;
    a target sideslip angle correcting unit configured to correct the target sideslip angle by using a sideslip angle correction amount calculated based on the torque detected by the torque detector; and
    an attitude control unit configured to control an attitude of the vehicle by using the target sideslip angle corrected by the target sideslip angle correcting unit.

2.  The vehicle attitude control system according to claim 1, wherein
    the rotary shaft includes a wheel axle of the driving wheel, and
    the torque detector includes a wheel axle torque sensor configured to detect a torque of the wheel axle.

3. The vehicle attitude control system according to claim 1, wherein
the power source is an engine,
the rotary shaft includes:

a crankshaft configured to convert piston motion of the engine to rotational motion; and
a wheel axle of the driving wheel, and

the torque detector includes:

a crankshaft torque sensor configured to detect a torque of the crankshaft; and
a wheel axle torque calculator configured to calculate a torque of the wheel axle based on a speed ratio between the crankshaft and the wheel axle.

4. The vehicle attitude control system according to claim 1, wherein
the power source is an engine,
the rotary shaft includes a wheel axle of the driving wheel, and
the torque detector includes:

a fuel injection amount acquirer configured to acquire information on a fuel injection amount for the engine; and
a wheel axle torque calculator configured to calculate a torque of the wheel axle based on a prestored correlation between the fuel injection amount and the torque of the wheel axle by using the information on the fuel injection amount that is acquired by the fuel injection amount acquirer.

5. The vehicle attitude control system according to any one of claims 1 to 4, wherein the target sideslip angle correcting unit is configured to set the sideslip angle correction amount to zero when an absolute value of the torque applied to the rotary shaft is equal to or smaller than a predetermined threshold.

*FIG. 1*

# FIG.2

EP 3 315 371 A1

## *FIG.3*

CORRECTION
AMOUNT △ β T,F

LEFT TURN

T,F

O

−

+

RIGHT TURN

## *FIG.4*

CORRECTION
AMOUNT △ β T,F

LEFT TURN

T,F

−th    O    th

−

+

RIGHT TURN

# F I G . 5

```
                    ┌──────────┐
                    │  START   │
                    └────┬─────┘
                         │
           ┌─────────────────────────────┐
    S1 ────┤  CALCULATE TARGET           │
           │  SIDESLIP ANGLE βs          │
           └─────────────┬───────────────┘
                         │
           ┌─────────────────────────────┐
    S2 ────┤  CORRECT βs                 │
           │  BY USING Δβ → β*           │
           └─────────────┬───────────────┘
                         │
           ┌─────────────────────────────┐
    S3 ────┤  ESTIMATE SIDESLIP          │
           │  ANGLE β BASED              │
           │  ON SENSOR                  │
           └─────────────┬───────────────┘
                         │
    S4 ───◇ |β−β*| ≤ βth ? ◇─── YES
                         │ NO
                         │
    S5 ───◇   β ≥ β*?    ◇─── NO
                         │ YES
```

| S6 — CALCULATE TARGET BRAKE PRESSURE FOR RIGHT REAR WHEEL | CALCULATE TARGET BRAKE PRESSURE FOR LEFT REAR WHEEL — S8 |
|---|---|
| S7 — OPERATE BRAKE PRESSURE DISTRIBUTING MECHANISM | OPERATE BRAKE PRESSURE DISTRIBUTING MECHANISM — S9 |
| RETURN | RETURN |

Europäisches
Patentamt

European
Patent Office

Office européen
des brevets

# EUROPEAN SEARCH REPORT

Application Number

EP 17 19 8830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/035129 A1 (YASUI YOSHIYUKI [JP]) 10 February 2011 (2011-02-10) | 1,2 | INV. B60T8/1755 B62D6/00 B60W30/045 |
| A | * paragraph [0025] - paragraph [0111]; figures 1-4 * | 3-5 | |
| Y | JP S61 113562 A (NISSAN MOTOR) 31 May 1986 (1986-05-31) | 1,2 | |
| A | * paragraph [0001] - paragraph [0003] * | 3-5 | |
| A | JP 3 333091 B2 (UNISIA JECS CORP) 7 October 2002 (2002-10-07) * the whole document * | 1-5 | |

TECHNICAL FIELDS
SEARCHED (IPC)

B60T
B62D
B60W

The present search report has been drawn up for all claims

| Place of search | Date of completion of the search | Examiner |
|---|---|---|
| Munich | 6 March 2018 | Graniou, Marc |

EPO FORM 1503 03.82 (P04C01)

**ANNEX TO THE EUROPEAN SEARCH REPORT
ON EUROPEAN PATENT APPLICATION NO.**

EP 17 19 8830

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2018

| Patent document cited in search report | | | Publication date | Patent family member(s) | | | Publication date |
|---|---|---|---|---|---|---|---|
| US 2011035129 | A1 | | 10-02-2011 | DE | 102010038846 | A1 | 10-02-2011 |
| | | | | US | 2011035129 | A1 | 10-02-2011 |
| | | | | US | 2014081546 | A1 | 20-03-2014 |
| JP S61113562 | A | | 31-05-1986 | JP | H0319107 | B2 | 14-03-1991 |
| | | | | JP | S61113562 | A | 31-05-1986 |
| JP 3333091 | B2 | | 07-10-2002 | JP | 3333091 | B2 | 07-10-2002 |
| | | | | JP | H1016738 | A | 20-01-1998 |

EPO FORM P0459

For more details about this annex : see Official Journal of the European Patent Office, No. 12/82

**REFERENCES CITED IN THE DESCRIPTION**

**Patent documents cited in the description**

- JP 2001233195 A

- JP 2013082268 A